# NEUE EUROPÄISCHE PATENTSCHRIFT

(11) **EP 0 980 786 B2**
(45) Veröffentlichungstag und Bekanntmachung des Hinweises auf die Entscheidung über den Einspruch: **18.04.2007**
(45) Hinweis auf die Patenterteilung: 21.11.2001
(21) Anmeldenummer: 99116310.6
(22) Anmeldetag: 19.08.1999
(51) Int. Cl.: B60P 1/44

(54) **Hublade-Bühnensystem**
System for a loading tailgate
Système pour hayon élévateur

(30) Priorität: 20.08.1998 DE 19837750; 28.08.1998 DE 19839058
(43) Veröffentlichungstag der Anmeldung: 23.02.2000
(73) Patentinhaber: Bär, Gerd, 74078 Heilbronn (DE)
(72) Erfinder: Bär, Gerd, 74078 Heilbronn (DE)
(74) Vertreter: Dreiss, Fuhlendorf, Steimle & Becker

(56) Entgegenhaltungen:
- EP-A- 0 808 747
- DE-A- 2 717 351
- FR-A- 2 346 182
- SE-A- 0 422 666
- US-A- 4 147 261
- US-A- 4 930 973
- Prospekt "Super Mover 1500" Produktions AB Hydro Lift

## Beschreibung

Die vorliegende Erfindung betrifft ein Hubladebühnensystem zur Befestigung an Fahrzeugen, mit einer Plattform und einem im wesentlichen parallelogrammförmigen Hubwerk, welches zwei horizontal beabstandete Tragwerke, eine Parallelzylindereinrichtung für das Verschwenken der Plattform von ihrer vertikalen Fahrstellung in ihre horizontale Arbeitsstellung und umgekehrt sowie eine Hubzylindereinrichtung zum Heben und Senken der Plattform in ihrer Arbeitsstellung umfasst, wobei die Hubzylindereinrichtung an einem Hubzylinderhebel, der um die Drehachse der beiden Tragwerke schwenkbar gelagert ist, angreift und mit diesem ein Kräftedreieck bildet und wobei das horizontal näher am Hubzylinderhebel liegende erste Tragwerk mit dem Hubzylinderhebel unmittelbar und das horizontal weiter vom Hubzylinderhebel beabstandete zweite Tragwerk über ein Torsionsprofil mittelbar drehfest verbunden sind.

Ein derartiges Hubladebühnensystem ist beispielsweise durch die EP-A-0 808 747 bekanntgeworden.

Bei dem aus der EP-A-0 808 747 bekannten Hubladebühnensystem sollen die Krafteinleirungspunkte der Hubzylindereinrichtung, der Hubzylinderhebel und des Tragarms eines jeweiligen Tragwerks in einer Ebene liegen. Es wird hierfür eine sehr komplexe Anordnung von Hubzylinderhebel und Tragarm beschrieben.

Es ist daher die Aufgabe der vorliegenden Erfindung, ein Hubladebühnensystem der eingangs genannten Art weiter zu vereinfachen.

Diese Aufgabe wird erfindungsgemäß gelöst durch eine Hubladebühnensystem mit den Merkmalen des Anspruchs 1.

Der einzige Tragarm des ersten Tragwerks lässt sich vorzugsweise einstückig als einfacher, ausgebrannter Formzuschnitt aus einer Blechtafel fertigen und muß nur noch gebohrt werden, so daß keine Schweißarbeiten anfallen.

Bei einer ganz besonders bevorzugten Ausführungsform ist am Hubzylinderhebel eine Anlage für eine am Tragarm des ersten Tragwerks befindliche Anschlagfläche vorgesehen, die sich zumindest in einer mittleren Arbeitsstellung der unbelasteten Plattform oberhalb der Anlage befindet und die zumindest in der oberen Arbeitsstellung der Plattform, in der das erste Tragwerk am Heck anschlägt, an der Anlage anliegt. Diese Maßnahme ermöglicht es, daß in den beiden Fällen extrem einseitiger Belastung der Plattform in deren oberer Arbeitsstellung stets ein absatz- und spaltfreier Übergang von der Plattform zum Heckschweller gegeben ist.

Damit wird eine Hubladebühne bereitgestellt, die in hohem Maße die praxisbedingten einseitigen Beladungen konstruktiv vorbestimmt aufnimmt und im Rahmen der zulässigen Tragfähigkeit immer spalt- und absatzfrei den Ladeboden erreicht.

Weitere bevorzugte Ausführungsformen des erfindungsgemäßen Hubladebühnensystems sind in den weiteren Unteransprüchen beschrieben.

Die nach der Lehre der Erfindung gebaute Hubladebühne ermöglicht eine äußerst billige Bauweise mit einem Hub- und einem Parallelzylinder. Die erfindungsgemäße Konstruktion ist auch in den Herstellungskosten äußerst günstig. Für beide Tragwerke und für den Hubzylinderhebel können einfache, ausgebrannte Formzuschnitte aus Blechtafeln verwendet werden, die nur gebohrt werden müssen, also keine'Schweißteile sind. Die anderen Bauteile, wie Torsions- und Biegeprofil und die beiden Anschraub- bzw. Anschlußkonsolen haben herkömmlichen Schweißaufwand.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Es zeigt:

- Fig. 1.: schematisch das erfindungsgemäße Hubladebühnensystem mit der Plattform in einer mittleren Arbeitsstellung zwischen dem Ladeboden des LKWs und dem Erdboden, in der sich die beiden Tragarme in einer etwa waagerechten Position befinden;
- Fig. 2: die Draufsicht des kompletten Hubladebühnensystems ohne Plattform, in seiner Befestigungsposition am Fahrgestellrahmen;
- Fig. 3: die Seitenansicht auf das Hubladebühnensystem entsprechend Richtung III in Fig. 1, wobei die Plattform in ihrer oberen und unteren Arbeitsstellung (gestrichelt) dargestellt ist;
- Fig. 4: die Seitenansicht auf das Hubladebühnensystem entsprechend Richtung IV in Fig. 1, wobei die Plattform in ihrer oberen und unteren Arbeitsstellung (gestrichelt) dargestellt ist; und
- Fig. 5: die Seitenansicht auf das Hubladebühnensystem entsprechend Richtung V in Fig. 2, wobei die Plattform in ihrer oberen und unteren Arbeitsstellung (gestrichelt) dargestellt ist.

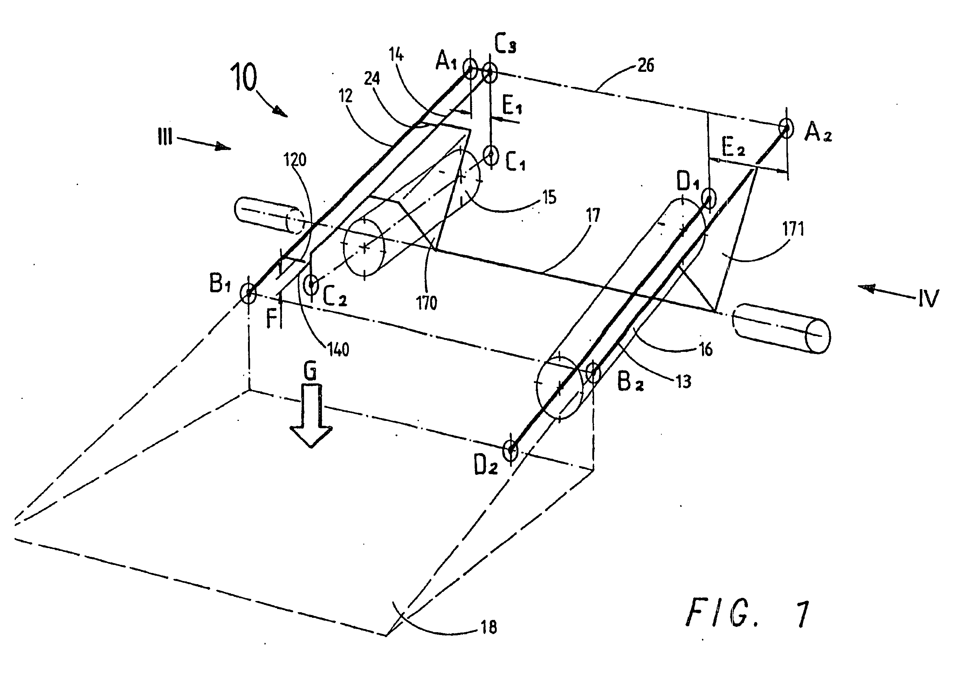

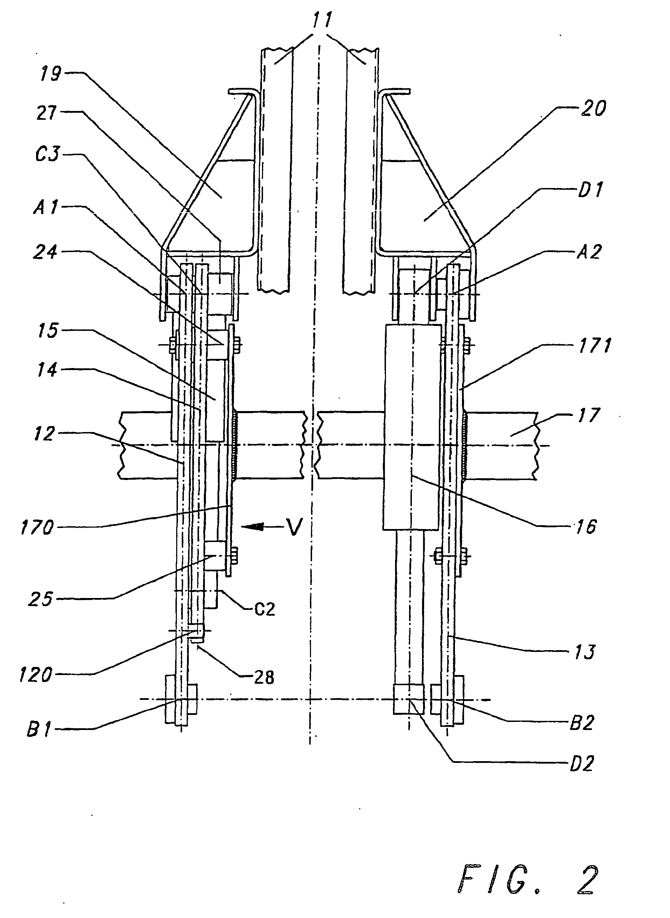

Bei dem in Fig. 1 schematisch gezeigten Hubladebühnensystem 10 ist auf die Darstellung der Befestigung am Fahrgestellrahmen 11 (Fig. 2) aus Übersichtsgründen verzichtet. Die die Plattform 18 tragenden Systempunkte sind A1 und B1, A2 und B2 sowie D1 und D2.

Die Basiselemente des parallelogrammförmigen Hubwerkes sind die zwei Tragarme 12 und 13, die um die gemeinsame Drehachse 26 in den Drehpunkten A1 bzw. A2 fahrzeugseitig schwenkbar gelagert sind. Neben dem ersten Tragarm 12 sind, nach innen um den Abstand E1 horizontal beabstandet, ein Hubzylinderhebel 14 und ein Hubzylinder 15 angeordnet. Fahrzeugseitig sind der Hubzylinder 15 um den Drehpunkt C1 und der Hubzylinderhebel 14 bei C3 um die Drehachse 26 der beiden Tragarme 12, 13 schwenkbar gelagert, wobei der Hubzylinder 15 am Hubzylinderhebel 14 bei C2 angreift und so mit diesem ein Kräftedreieck C1, C2, C3 bildet. Die Kraft des Hubzylinders 15 wird im Punkt C2 in den Hubzylinderhebel 14 eingeleitet, der eine Radiusbewegung um seinen Drehpunkt C3 beschreibt.

Die Übertragung der Drehbewegung und der Kräfte vom Hubzylinderhebel 14 erfolgt auf den ersten Tragarm 12 über eine unmittelbar zwischen ihnen gebildete drehfeste Verbindung und auf den zweiten Tragarm 13 mittelbar durch das relativ lange Torsions- und Biegeprofil 17. Da dieses noch zusätzlich die Funktion eines Unterfahrschutzes hat, kann es nicht im Bereich der beiden Tragarme 12, 13 liegen und ist daher unter ihnen jeweils über eine Anschlußplatte 170, 171 am Hubzylinderhebel 14 bzw. am zweiten Tragarm 13 drehfest befestigt. Aufgrund der relativ großen Länge des Torsions- und Biegeprofils 17 resultiert bei gleicher Belastung ein großer Torsionswinkel. Naturgemäß hat diese Kräfteumleitung eine viel größere Elastizität und gibt daher im Ergebnis eine größere elastische Durchfederung mit der Auswirkung eines größeren Drehwinkels des zweiten Tragarmes 13 um seinem Drehpunkt A2, gegenüber dem ersten Tragarm 12 um seinen Drehpunkt A1.

Der erste Tragarm 12 ist ein reiner Biegeträger, der sich bei Belastung in etwa um den Punkt A1 drehend verformt. Der Hubzylinderhebel 14 seinerseits ist ebenfalls ein Biegeträger mit dem Drehpunkt in etwa C3, d.h. die Gesamtelastizität resultiert aus der Addition der beiden Verdrehwinkel des ersten Tragarmes 12 und des Hubzylinderhebels 14. Da am Hubzylinderhebel 14 das Torsions- und Biegeprofil 17 befestigt ist, welches je nach Belastung dem Drehwinkel des ersten Tragarmes 12 vorauseilt, wird dadurch der große Torsionswinkel und die Elastizität der Anschlußplatte 170 und 171 kompensiert. Damit wird erreicht, daß sich in der Konsequenz der erste und zweite Tragarm 12, 13 synchron zueinander bewegen.

Der Parallelzylinder 16, der fahrzeugseitig im Punkt D1 und an der Plattform 18 bei D2 angelenkt ist, hat Funktionen, wie das Schließen der Plattform etc., die allgemein bekannt sind und auf die daher hier nicht eingegangen wird. Er dient außerdem zur Parallelführung und ist dazu, nach innen um den Abstand E2 horizontal versetzt, parallel zum zweiten Tragarm 13 angeordnet. Bei der Hub- und Senkbewegung wirkt der Parallelzylinder 16 als statische Druckstrebe. Der Versatz des Parallelzylinders 16 um den Abstand E2 gegenüber dem zweiten Tragarm 13 vermindert die Torsionsbelastung der entsprechend torsionssteif ausgebildeten Plattform 18 und übt daher eine stabilisierende Wirkung auf diese aus.

Wie in Fig. 2 gezeigt, sind der erste Tragarm 12 und der Hubzylinderhebel 14 auf eine um die gemeinsame Drehachse 26 (Drehpunkte A1, C3) schwenkbare Lagerbuchse 27 aufgepreßt und miteinander in einem radialen Abstand von der gemeinsamen Drehachse 26 über einen Distanzpaßbolzen 24 mit zugehöriger Schraubverbindung drehfest verbunden. Der zweite Tragarm 13 ist mit dem Hubzylinderhebel 14 ebenfalls drehfest durch den Kräftestrang, bestehend aus zweiter Anschlußplatte 171, Torsions- und Biegeprofil 17 und erster Anschlußplatte 170 drehfest verbunden. Die Befestigung an letzterer erfolgt an zwei Punkten mittels des Distanzpaßbolzen 24 und eines Distanzauges 25 mit den zugehörigen Schrauben. Die Befestigung der zweiten Anschlußplatte 171 am zweiten Tragarm 13 erfolgt direkt mit einem Schraubenpaar.

Die Lagerbuchse 27 sowie die Lager (Drehpunkte A2, D1) für den zweiten Tragarm 13 und den Parallelzylinder 16 sind am Fahrzeugrahmen 11 über zwei Anschlußkonsolen 19, 20 gehalten. Im dargestellten Ausführungsbeispiel liegen der Hubzylinder 15 und der Hubzylinderhebel 14 in einer gemeinsamen Mittelebene 28.

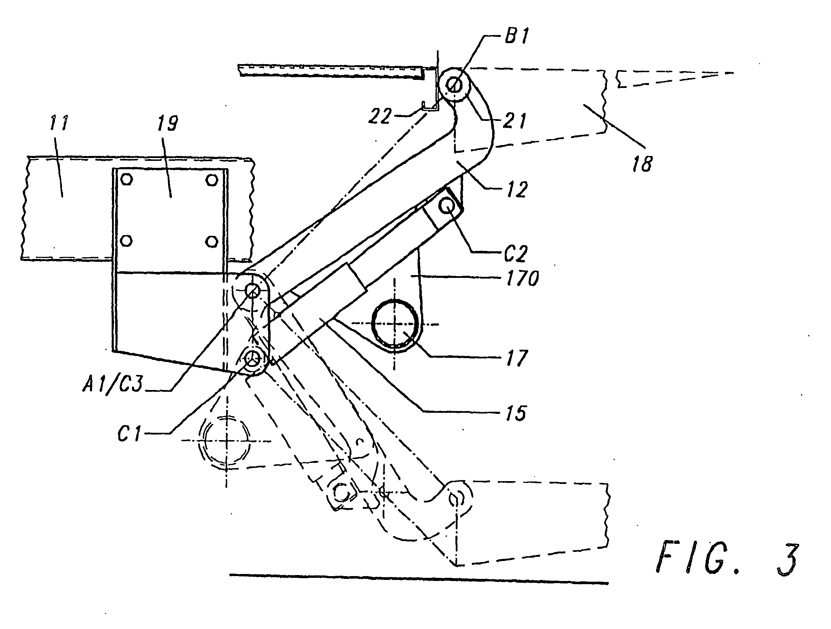

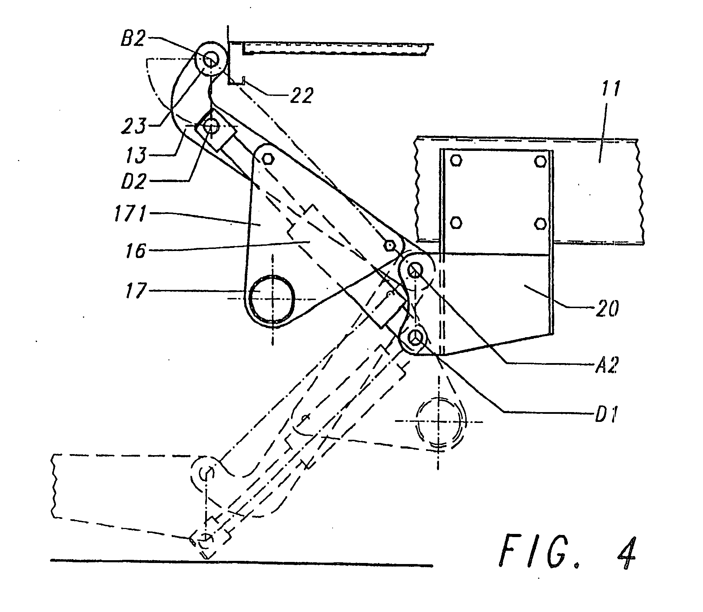

Die Fign. 3 bis 5 zeigen, daß bei in ihre obere Arbeitsstellung angehobener Plattform 18 die Lageraugen 21, 23 der beiden Tragarme 12, 13 am Heckschweller 22 des Fahrzeugs anliegen, wodurch auch die Plattform 18 den Heckschweller 22 absatz- und spaltfrei erreicht.

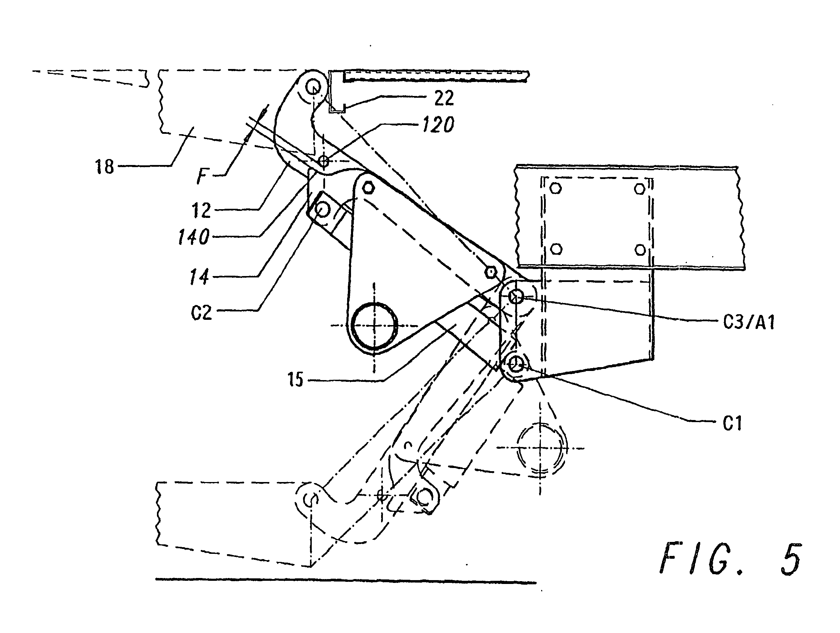

Wie am deutlichsten in Fig. 5 gezeigt, ist am Hubzylinderhebel 14 eine Anlage 140 für einen am ersten Tragarm 12 befindlichen Anschlagzapfen 120 vorgesehen. Zumindest in der in Fig. 1 gezeigten mittleren Arbeitsstellung der unbelasteten Plattform 18 befindet sich der Anschlagzapfen 120 um ein Maß F ungleich 0 oberhalb der Anlage 140. Bei Belastung der Plattform 18 bewegen sich die Drehwinkel des ersten Tragarmes 12 und des Hubzylinderhebels 14 gegenläufig. Hier wirkt sich also die Elastizität einerseits des Hubzylinderhebels 14 und andererseits des ersten Tragarmes 12 aus. Die Größe des Gesamtverdrehwinkels wird durch den Anschlagzapfens 120 und die Anlage 140 begrenzt.

Bei gleichmäßiger bzw. mittiger Belastung der Plattform 18 mit dem Gewicht G werden die Kräfte über den Punkt B1 in den ersten Tragarm 12 und über den Punkt B2 in den zweiten Tragarm 13 gleichmäßig eingeleitet, so daß die beiden Lageraugen 21, 23 gleichzeitig am Heckschweller 22 anschlagen.

In der Praxis muß von einer nicht mittigen Beladung ausgegangen werden. Bei nicht mittiger Beladung hebt jede Hubladebühne in einer gewissen Schrägneigung in Richtung der einseitigen Beladung, d.h., die Schrägneigung der Plattform ist so lange gegeben, wie die Plattform nicht am Boden aufliegt bzw. die Lageraugen der Tragarme in oberer Arbeitsposition der Plattform nicht am Heckschweller des Ladebodens anliegen. Beim Anfahren an den Heckschweller des LKWs wird aber durch die Kraftreserve der Hubzylinder bei bekannten Hubladebühnen mit zwei Hub- und zwei Parallelzylindern der nacheilende Tragarm nachgeführt, so daß ein spalt- und absatzfreier Übergang gegeben ist.

Liegt die Last einseitig in Richtung B1, ist der erste Tragarm 12 stärker belastet als der zweite Tragarm 13. Die elastische Verformung des Tragarmes 12 ist deshalb größer als die des zweiten Tragarmes 13. Der Hubzylinderhebel 14 erfährt ebenfalls eine elastische Verformung, und der Abstand F verringert sich dadurch je nach Belastung bis hin zum Extrem, daß F = 0 wird. Dabei kann fast die ganze Hubzylinderkraft übertragen werden. Der hier vorauseilende zweite Tragarm 13 schlägt zuerst am Heckschweller 22 an. Die Rest-Hubzylinderkraft reicht aus, um das Torsions- und Biegeprofil 17 und den zweiten Tragarm 13 soweit elastisch zu verformen, daß auch der erste Tragarm 12 mit seinem Lagerauge 21 am Heckschweller 22 anschlägt.

Ist die einseitige Beladung in Richtung B2, erfolgt die Kräfteübertragung durch den Kräftestrang Hubzylinderhebel 14, Anschlußplatte 170, Torsions- und Biegeprofil 17, Anschlußplatte 171 in den zweiten Tragarm 13. Durch die elastische Verformung dieses Kräftestranges ist der darauf folgende Drehwinkel des zweiten Tragarmes 13 größer als der des Hubzylinderhebels 14. Das Maß F reduziert sich. Eine gewisse Schräglage der Plattform 18 wird aber spätestens dann ausgeglichen, wenn der vorauseilende erste Tragarm 12 mit seinem Lagerauge 21 voreilend am Heckschweller 22 anschlägt. Durch die weitere Kräfteentwicklung des Hubzylinders 15 und die weitere elastische Verformung des Hubzylinderhebels 14 reduziert sich das Maß F auf 0, wobei die Konstruktion so gewählt ist, daß vorher der zweite Tragarm 13 mit seinem Lagerauge 23 ebenfalls am Heckschweller 22 anschlägt.

Damit ist in beiden Fällen ein absatz- und spaltfreier Übergang von der Plattform 18 zum Heckschweller 22 gegeben. Damit nimmt dieses Hubladebühnensystem 10 in hohem Maße die praxisbedingten einseitigen Beladungen konstruktiv vorbestimmt auf und erreicht im Rahmen der zulässigen Tragfähigkeit immer spalt- und absatzfrei den Ladeboden des Fahrzeugs.

Diese Konstruktion ist auch in den Herstellungskosten unübertroffen, denn bei den Tragarmen 12, 13 sowie bei dem Hubzylinderhebel 14 können einfache, ausgebrannte Formzuschnitte aus Blechtafeln verwendet werden. Diese Teile müssen nur gebohrt werden, sind also keine Schweißteile, und ihre zugehörigen Lager und Lagerbuchsen können eingepreßt werden. Die anderen Bauteile, wie Torsions- und Biegeprofil 17 und die beiden Anschlußkonsolen 19, 20, haben herkömmlichen Schweißaufwand.

## Patentansprüche

1. Hubladebühnensystem (10) zur Befestigung an Fahrzeugen, mit einer Plattform (18) und einem im wesentlichen parallelogrammförmigen Hubwerk, welches zwei horizontal beabstandete Tragwerke, eine Parallelzylindereinrichtung (16) für das Verschwenken der Plattform (18) von ihrer vertikalen Fahrstellung in ihre horizontale Arbeitsstellung und umgekehrt sowie eine Hubzylindereinrichtung (15) zum Heben und Senken der Plattform (18) in ihrer Arbeitsstellung umfaßt, wobei die Hubzylindereinrichtung (15) an einem Hubzylinderhebel (14), der um die Drehachse (26) der beiden Tragwerke schwenkbar gelagert ist, angreift und mit diesem ein Kräftedreieck bildet und wobei das horizontal näher am Hubzylinderhebel (14) liegende erste Tragwerk mit dem Hubzylinderhebel (14) unmittelbar und das horizontal weiter vom Hubzylinderhebel (14) beabstandete zweite Tragwerk über ein Torsionsprofil (17) mittelbar drehfest verbunden sind,
wobei das erste Tragwerk durch einen einzigen Tragarm (12) gebildet ist, **dadurch gekennzeichnet, dass** der einzige Tragarm (12) des ersten Tragwerks nach außen mit horizontalem Abstand (E1) zum Hubzylinderhebel (14) angeordnet ist, wobei der Tragarm (12) des ersten Tragwerks und der Hubzylinderhebel (14) um die gemeinsame Drehachse (26) in horizontal voneinander beabstandeten Drehpunkten (A1, C3) auf dieser gemeinsamen Drehachse (26) gelagert sind, und daß der Hubzylinderhebel (14) und der Tragarm (12) des ersten Tragwerks in einem radialen Abstand von der gemeinsamen Drehachse (26) durch eine Querverbindung (24) miteinander verbunden sind.

2. Hubladebühnensystem nach Anspruch 1, **dadurch gekennzeichnet, daß** der Hubzylinderhebel (14) und der Tragarm (12) des ersten Tragwerks mittels einer gemeinsamen Lagerbuchse (27) um die gemeinsame Drehachse (26) gelagert sind.

3. Hubladebühnensystem nach Anspruch 1 oder 2, **dadurch gekennzeichnet, daß** das Torsionsprofil (17) am Hubzylinderhebel (14) über eine nur an diesem gehaltene Anschlußeinrichtung (170) befestigt ist.

4. Hubladebühnensystem nach Anspruch 3, **dadurch gekennzeichnet, daß** der Hubzylinderhebel (14), der Tragarm (12) und die Anschlußeinrichtung (170) des ersten Tragwerks über die Querverbindung (24) miteinander befestigt sind.

5. Hubladebühnensystem nach einem der vorhergehenden Ansprüche, **dadurch gekennzeichnet, daß** die Anschlußeinrichtung (170) des ersten Tragwerks nach innen mit horizontalem Abstand zum Hubzylinderhebel (14) angeordnet ist.

6. Hubladebühnensystem nach einem der vorhergehenden Ansprüche, **dadurch gekennzeichnet, daß** die senkrechte Mittelebene der Hubzylindereinrichtung (15) mit der senkrechten Mittelebene des Hubzylinderhebels (14) zusammenfällt.

7. Hubladebühnensystem nach einem der vorhergehenden Ansprüche, **dadurch gekennzeichnet, daß** am Hubzylinderhebel (14) eine Anlage (140) für eine am Tragarm (12) des ersten Tragwerks befindliche Anschlagfläche (120) vorgesehen ist, die sich zumindest in einer mittleren Arbeitsstellung der unbelasteten Plattform (18) oberhalb der Anlage (140) befindet und die zumindest in der oberen Arbeitsstellung der Plattform (18), in der das erste Tragwerk am Heck (Heckschweller (22) anschlägt, an der Anlage (140) anliegt.

8. Hubladebühnensystem nach einem der vorhergehenden Ansprüche, **dadurch gekennzeichnet, daß** die Parallelzylindereinrichtung (16) nach innen mit horizontalem Abstand (E2) zum zweiten Tragwerk angeordnet ist.

9. Hubladebühnensystem nach einem der vorhergehenden Ansprüche, **dadurch gekennzeichnet, daß** das Torsionsprofil (17) mit dem zweiten Tragwerk über eine nur an diesem gehaltene Anschlußeinrichtung (171) verbunden ist.

10. Hubladebühnensystem nach einem der vorhergehenden Ansprüche, **dadurch gekennzeichnet, daß** das zweite Tragwerk durch einen einzigen Tragarm (13) gebildet ist.

## Claims

1. A loading tailgate system (10) for mounting on vehicles, with a platform (18) and a substantially parallelogram-shaped lifting mechanism which comprises two horizontally spaced support mechanisms, a parallel cylinder-arrangement (16) for pivoting the platform (18) from its vertical transit position into its horizontal working position and vice versa and a lifting cylinder arrangement (15) for raising and lowering the platform (18) into its working position, whereby the lifting cylinder arrangement (15) engages a lifting cylinder lever (14) which is mounted to pivot about the axis (26) of rotation of the two support mechanisms, forming with this latter a triangle of forces and whereby the first support mechanism which is horizontally closer to the lifting cylinder lever (14) is directly connected to the lifting cylinder lever (14) and the second support mechanism which is horizontally spaced farther away from the lifting cylinder lever (14) is indirectly and rotationally rigidly connected to a torsion section (17), whereby the first support mechanism is constituted by a single support arm,
**characterised in that** the single support arm (12) of the first support mechanism is disposed outwardly at a horizontal distance (E1) from the lifting cylinder lever (14), whereby the support arm (12) of the first support mechanism and the lifting cylinder lever (14) are mounted about the common axis of rotation (26) in pivots (A1, C3) spaced apart from each other horizontally on this common axis of rotation (26), and **in that** the lifting cylinder lever (14) and the support arm (12) of the first support mechanism are connected to each other by a transverse connection (24) at a radial distance from the common axis of rotation (26).

2. A loading tailgate system according to claim 1, **characterised in that** the lifting cylinder lever (14) and the support arm (12) of the first support mechanism are mounted about the common axis (26) of rotation by means of a common bearing bush (27).

3. A loading tailgate system according to claim 1 or 2, **characterised in that** the torsion section (17) is fixed on the lifting cylinder lever (14) by a connecting means (170) which is held solely on the latter.

4. A loading tailgate system according to claim 3, **characterised in that** the lifting cylinder lever (14), the support arm (12) and the connecting means (170) of the first support mechanism are fixed to one another by a transverse connection (24).

5. A loading tailgate system according to one of the preceding claims, **characterised in that** the connecting means (170) of the first support mechanism is disposed inwardly at a horizontal distance from the lifting cylinder lever (14).

6. A loading tailgate system according to one of the preceding claims, **characterised in that** the vertical central plane through the lifting cylinder arrangement (15) coincides with the vertical central plane through the lifting cylinder lever (14).

7. A loading tailgate system according to one of the preceding claims, **characterised in that** there is on the lifting cylinder lever (14) a support (140) for a bearing surface (120) on the support arm (12) of the first support mechanism, the said bearing surface being disposed above the support (140) at least in a central working position of the unladen platform (18) and which, at least in the upper working position of the platform (18), in which the first support mechanism abuts the tail (tail member 22), resting on the support (140).

8. A loading tailgate system according to one of the preceding claims, **characterised in that** the parallel cylinder lever (16) is disposed inwardly at a horizontal distance (E2) from the second support arm mechanism.

9. A loading tailgate system according to one of the preceding claims, **characterised in that** the torsion section (17) is connected to the second support mechanism by a connecting arrangement (171) which is held only on this latter.

10. A loading tailgate system according to one of the preceding claims, **characterised in that** the second support mechanism is constituted by a single support arm (13).

## Revendications

1. Système (6) pour plate-forme élévatrice de chargement destiné à être fixé sur des véhicules, comportant une plate-forme (18) et une unité de levage essentiellement en forme de parallélogramme, qui comporte deux unités de support distantes horizontalement, un dispositif formant vérins de levage parallèles (16) pour faire pivoter la plate-forrne. (18) depuis sa position verticale en cours de déplacement dans sa position horizontale de travail et inversement, ainsi qu'un dispositif formant vérin de levage (15) pour soulever et abaisser la plate-forme (18) dans sa position de travail, dans lequel le dispositif formant vérin de levage (15) attaque un levier de vérin de levage (14), qui est monté de manière à pouvoir pivoter autour de l'axe de rotation (26) des deux unités de support, et forme avec ce levier un triangle d'application de force, et dans lequel la première unité de support, qui est horizontalement la plus proche sur le levier (14) du vérin de levage, est reliée solidairement en rotation directement au levier (14) du vérin de levage et la seconde unité de support, qui est plus éloignée horizontalement du levier (14) du vérin de levage, est reliée solidairement en rotation d'une manière indirecte au moyen d'un profilé de torsion (17),
où la première unité de support est formée par un seul bras de support (12), **caractérisé en ce que** le seul bras de support (12) de la première unité de support est disposé vers l'extérieur à une distance horizontale (E1) du levier (14) du vérin de levage, où le bras de support (12) de la première unité de support et le levier (14) du vérin de levage sont montés à des centres de rotation (A1, C3) distants horizontalement l'un de l'autre autour de l'axe de rotation commun (26), et le levier (14) du vérin de levage et le bras de support (12) de la première unité de support sont reliés entre eux à une certaine distance radiale de l'axe de rotation commun (26) par une liaison transversale (24).

2. Système de plate-forme élévatrice de chargement selon la revendication 1, **caractérisé en ce que** le levier (14) du vérin de levage et le bras de support (12) de la première unité de support sont tourillonnés, autour de l'axe de rotation commun (26), au moyen d'un coussinet de palier commun (27).

3. Système de plate-forme élévatrice de chargement selon la revendication 1 ou 2, **caractérisé en ce que** le profilé de torsion (17) est fixé sur le levier (14) du vérin de levage par l'intermédiaire d'un dispositif de raccordement (170), qui est fixé sur ce levier.

4. Système de plate-forme élévatrice de chargement selon la revendication 3, **caractérisé en ce que** le levier (14) du vérin de levage, le bras de support (12) et le dispositif de raccordement (170) de la première unité de support sont fixés entre eux par l'intermédiaire de la liaison transversale (24).

5. Système de plate-forme élévatrice de chargement selon l'une des revendications précédentes, **caractérisé en ce que** le dispositif de raccordement (170) de la première unité de support est disposé vers l'intérieur à une certaine distance horizontale du levier (14) du vérin de levage.

6. Système de plate-forme élévatrice de chargement selon l'une des revendications précédentes, **caractérisé en ce que** le plan médian vertical du dispositif (15) formant vérin de levage est confondu avec le plan médian vertical du levier (14) du vérin de levage.

7. Système de plate-forme élévatrice de chargement selon l'une des revendications précédentes, **caractérisé en ce que** sur le levier (14) du vérin de levage est prévu un appui (140) pour une surface de butée (120) située sur le bras de support (12) de la première unité de support, appui qui est situé au-dessus de l'installation (140) lorsque la plate-forme (18) non chargée est au moins dans une position de travail moyenne, et s'applique contre l'appui (140) lorsque la plate-forme (18) est au moins dans la position de travail supérieure dans laquelle la première unité de support est en butée contre le hayon (seuil de hayon 22).

8. Système de plate-forme élévatrice de chargement selon l'une des revendications précédentes, **caractérisé en ce que** le dispositif (16) formant vérin parallèle est disposé sur le côté intérieur à une certaine distance horizontale (E2) de la seconde unité de support.

9. Système de plate-forme élévatrice de chargement selon l'une des revendications précédentes, **caractérisé en ce que** le profilé de torsion (17) est relié à la seconde unité de support par l'intermédiaire d'un dispositif de raccordement (171) retenu uniquement sur cette unité.

10. Système de plate-forme élévatrice de chargement selon l'une des revendications précédentes, **caractérisé en ce que** la seconde unité de support est formée par un seul bras de support (13).
